# FASCICULE DE BREVET EUROPEEN

(11) **EP 0 725 464 B1**
(45) Date de publication et mention de la délivrance du brevet: **13.10.1999**
(21) Numéro de dépôt: 96410009.3
(22) Date de dépôt: 23.01.1996
(51) Int. Cl.: H02B 1/30, A47B 91/08

(54) **Socle pour armoire électrique ou analogue et armoire équipée d'un tel socle**
Sockel für einen Schaltschrank oder dergleichen und Schrank mit einen solchen Sockel
Base for an electric cabinet or similar and a cabinet equipped with such a base

(30) Priorité: 31.01.1995 FR 9501399
(43) Date de publication de la demande: 07.08.1996
(73) Titulaire: Schneider Electric Industries SA, 92100 Boulogne Billancourt (FR)
(72) Inventeur: Pin, Jean-Pierre, F-38050 Grenoble Cedex 09 (FR); Bossan, Edmond, F-38050 Grenoble Cedex 09 (FR); Laboch, Kasimir, F-38050 Grenoble Cedex 09 (FR); Hermal, Marc, F-38050 Grenoble Cedex 09 (FR); Milbach, Pierre, F-38050 Grenoble Cedex 09 (FR); Kaczmarek, Stéphane, F-38050 Grenoble Cedex 09 (FR)
(74) Mandataire: Hecké, Gérard

(56) Documents cités:
- EP-A- 0 342 478
- CH-A- 552 964
- DE-C- 4 103 678
- US-A- 2 954 638

## Description

L'invention concerne un socle pour des armoires ou coffrets utilisés pour loger de l'appareillage électrique et/ ou électronique et une armoire équipée d'un tel socle.

De manière connue, un tel socle peut être composé de quatre plots d'angle et de quatre panneaux ou caches reliant les plots d'angle deux à deux, lesdits plots d'angle comprenant chacun une plaque d'assemblage supérieure et une plaque d'assemblage inférieure assemblées mutuellement par des cloisons verticales formant nervures, la plaque supérieure comportant des moyens de fixation du plot au châssis de l'armoire, tandis que la plaque inférieure comporte des moyens de fixation du plot au sol, et les faces latérales extérieures formant angle du plot, comportant des moyens de fixation des panneaux sur lesdites faces.

La plupart des socles d'armoire électrique connus comportent des moyens de fixation au sol situés le long du (ou des) bord(s) intérieur(s) des plots d'angle, pour des raisons notamment d'ordre esthétique, de sorte que ces moyens sont peu accessibles pour un opérateur placé à l'extérieur du socle, cette fixation devenant particulièrement difficile lorsque le châssis ou bien l'armoire complète est montée sur le socle avant la fixation de ce dernier au sol. Il résulte de cette situation que, pour réaliser cette fixation au sol, l'opérateur est souvent contraint d'effectuer un certain nombre d'opérations préalables successives de positionnement, de marquage au sol, de perçages, avant l'opération de fixation proprement dite.

Un autre inconvénient des socles connus tient en ce qu'ils ne présentent pas une rigidité suffisante, particulièrement lorsqu'ils sont juxtaposés longitudinalement pour supporter des cellules multiples. En outre, ces socles ne permettent pas l'utilisation de tous les moyens de manutention les plus courants à savoir, rouleaux, transpalettes, élingage (celui-ci étant actuellement réalisé par le haut de l'armoire), barres, kits de transport à roulettes etc.

Un socle du genre précédemment mentionné est connu du document FR-2.672.741. Dans ce document, les pieds d'angle présentent en outre une forme particulièrement complexe, d'où il résulte un coût de fabrication particulièrement élevé.

La présente invention résout ces problèmes et propose un socle pour armoires électriques ou analogues, particulièrement avantageux en terme de rigidité mécanique, en particulier en cas de juxtaposition, en terme de confort et de souplesse d'usage, le socle étant en outre de conception particulièrement simple d'où ils résulte un coût de fabrication réduit.

A cet effet, la présente invention a pour objet un socle, du genre précédemment mentionné, caractérisé en ce que la plaque d'assemblage inférieure comporte au moins un orifice de fixation du plot au sol, accessible à travers une partie libre de l'une au moins des faces extérieures du plot et dont l'axe est incliné par rapport au plan de cette face de manière à faciliter l'opération de fixation.

Selon une réalisation particulière de l'invention, la plaque d'assemblage inférieure comporte deux orifices de fixation accessibles respectivement à travers les deux faces extérieures du plot.

De préférence, l'angle d'inclinaison du (ou des) axe(s) de fixation précité(s) par rapport au plan de la face extérieure correspondante du plot est d'environ 20°.

Avantageusement, les orifices de fixation précités sont réalisés dans des protubérances formées sur la plaque inférieure d'assemblage .

Selon une autre caractéristique particulière de l'invention, le socle comporte une cloison verticale intérieure comprenant au moins une ouverture de passage de barres de manutention ou d'élingues introduites à travers les faces extérieures du plot.

Selon une autre caractéristique, la cloison intérieure précitée est contenue dans un plan formant avec l'une et/ou l'autre des faces extérieures du plot un angle d'environ 45° et en ce qu'elle comporte une ouverture unique de forme oblongue autorisant le passage d'une barre ou élingue introduite perpendiculairement à l'une ou l'autre des deux faces extérieures du plot.

Selon une autre caractéristique, il comporte deux cloisons extérieures, s'étendant à partir de l'extrémité intérieure des bords extérieurs des plaques d'assemblage jusqu'à environ le tiers de leur longueur, de manière à laisser libre accès aux orifices de fixation ainsi qu'à l'ouverture (ou aux ouvertures) ménagée(s) dans la cloison intérieure .

Selon une autre caractéristique il comporte deux cloisons intermédiaires reliant respectivement les deux cloisons extérieures à la cloison intérieure précitée .

Selon une autre caractéristique les cloisons extérieures précitées comportent des moyens de fixation à un plot intermédiaire interposé entre deux plots d'angle adjacents en cas de juxtaposition de deux socles.

Selon une autre caractéristique, les plaques d'assemblage supérieure et inférieure sont de forme triangulaire et en ce que la cloison intérieure précitée relie les deux bords intérieurs respectifs des deux plaques d'assemblage.

Avantageusement, il comporte en outre une cloison d'angle de section transversale en forme de L, reliant les deux régions d'angle respectives des deux plaques d'assemblage et en ce que les deux orifices de fixation sont interposés respectivement entre les deux cloisons intermédiaires et cette cloison d'angle .

Avantageusement, les deux plaques ainsi que les cloisons verticales sont formées à partir d'une pièce de tôle unique découpée et pliée de manière appropriée, préalablement à la solidarisation des bords des plaques aux bords correspondants des cloisons.

Selon une autre caractéristique, les deux plaques d'assemblage comportent respectivement deux autres orifices de fixation et se prolongent au delà de leur bord intérieur pour former respectivement deux pattes, ces deux pattes comportant respectivement deux éléments de positionnement complémentaires.

L'invention a également pour objet une armoire électrique comprenant un châssis comportant douze tronçons de profilés creux reliés de manière à former un parallélépipède, ledit châssis étant fixé par ses quatre régions d'angle respectivement à quatre plots d'angle d'un socle comportant les caractéristiques décrites précédemment prises seules ou en combinaison.

Mais d'autres avantages de l'invention apparaîtront mieux dans la description détaillée qui suit et se réfère aux dessins annexés donnés uniquement à titre d'exemple et dans lesquels :

La figure 1 est une vue en perspective partiellement éclatée, illustrant le châssis d'une armoire électrique monté sur un socle conforme à l'invention.

La figure 2 est une vue partielle en perspective d'un panneau (ou cache) du socle de l'invention.

La figure 3 est une vue en perspective de l'un des plots d'angle d'un socle, selon une réalisation particulière de l'invention.

La figure 4 illustre dans une vue en perspective, un plot intermédiaire de liaison de deux plots d'angle adjacents.

La figure 5 est une vue similaire à la figure 3, plus détaillée.

La figure 6 est une vue suivant F de la figure 5.

La figure 7 est une vue en coupe suivant A-A de la figure 6.

La figure 8 est une vue suivant G de la figure 9.

La figure 9 est une vue de dessus de la figure 5.

La figure 10 est un élément de détail B de la figure 9.

La figure 11 est une vue en coupe suivant c de la figure 7.

La figure 12 est une vue en perspective éclatée, illustrant la juxtaposition de deux socles conformes à l'invention, sur lesquels deux bâtis d'armoire électriques sont destinés à être montés.

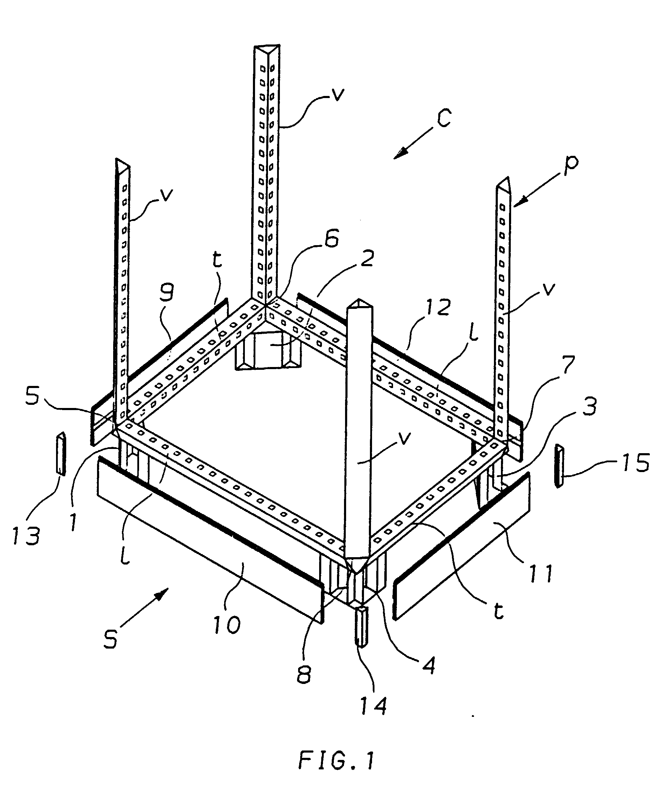

Sur la figure 1, on voit un châssis d'armoire électrique C dont seule la partie inférieure est représentée, posé sur un socle S conforme à l'invention. Ce châssis C est constitué par douze tronçons de profilés creux p, comprenant quatre tronçons verticaux v reliés à leurs parties inférieures et à leurs parties supérieures par un cadre horizontal formé de deux tronçons longitudinaux 1 et de deux tronçons transversaux t. Le socle S de l'invention comprend principalement quatre plots d'angle 1, 2, 3, 4 sur lesquels reposent respectivement les quatre régions d'angle 5, 6, 7, 8 du châssis précité C, quatre panneaux 9, 10, 11, 12 (ou caches), reliant les plots d'angle 1, 2, 3, 4 deux à deux, et quatre éléments de coin 13, 14, 15, 16 reliant les deux extrémités adjacentes de deux panneaux perpendiculaires (9, 10); (10, 11); (11, 12); (12, 9).

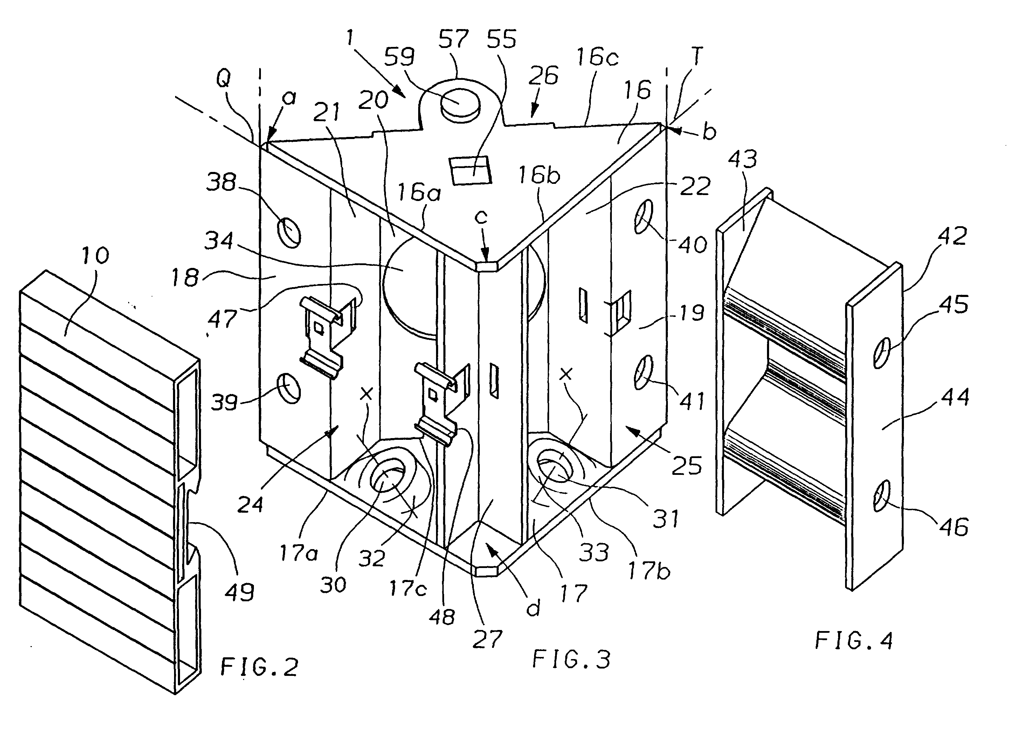

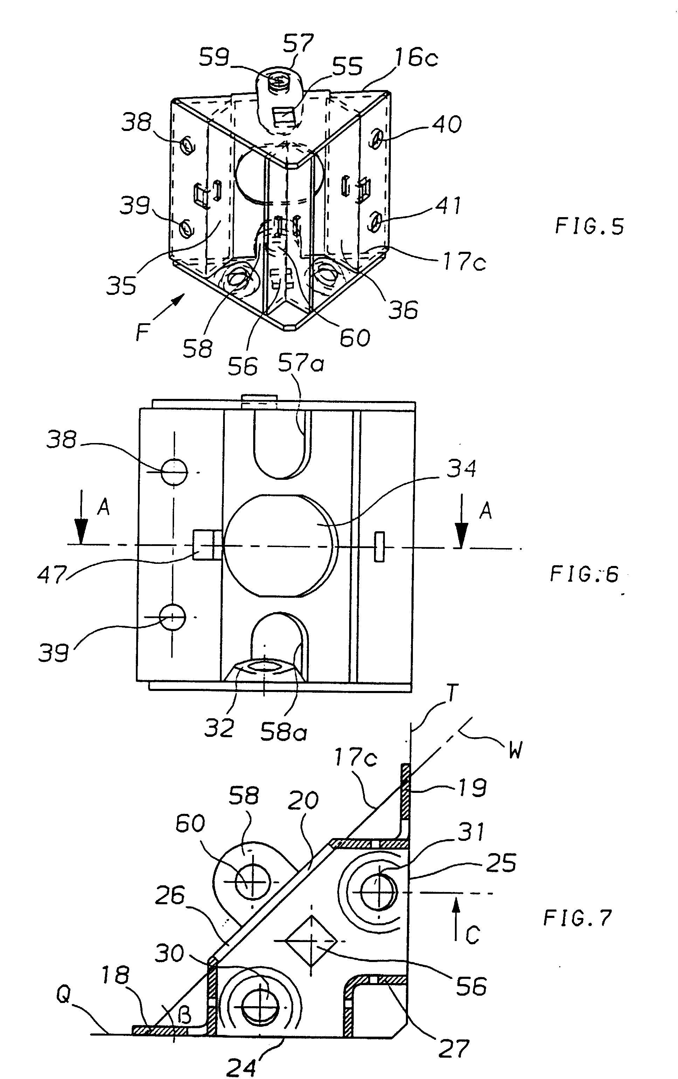

En se reportant aux figures 3 et 5 à 11, on voit que conformément à une réalisation particulière de l'invention, chaque plot d'angle comprend deux plaques d'assemblage horizontales 16, 17 de forme générale triangulaire, reliées par des cloisons verticales 18 à 22. Les deux faces extérieures verticales 24, 25 des plots 1 sont obturées partiellement par des cloisons extérieures 18, 19 reliant chacune les deux bords extérieurs opposés 16a, 17a et 16b, 17b des plaques d'assemblage 16, 17 et s'étendant à partir de l'une des extrémités a, b de ces bords sur environ un tiers de leur longueur.

La partie centrale de la face intérieure 26 de chaque plot 1 est obturée par une cloison verticale 20, dite cloison intérieure, reliant les deux bords intérieurs opposés respectifs 16c, 17c des plaques d'assemblage 16, 17 et s'étendant sur environ la moitié de leur longueur. Cette cloison intérieure 20 est reliée aux deux cloisons extérieures précitées 18, 19 respectivement par deux cloisons intermédiaires 21, 22. Les deux plaques d'assemblage 16, 17 sont également reliées dans leur région d'angle c,d par une cloison d'angle 27 de section transversale en forme de L.

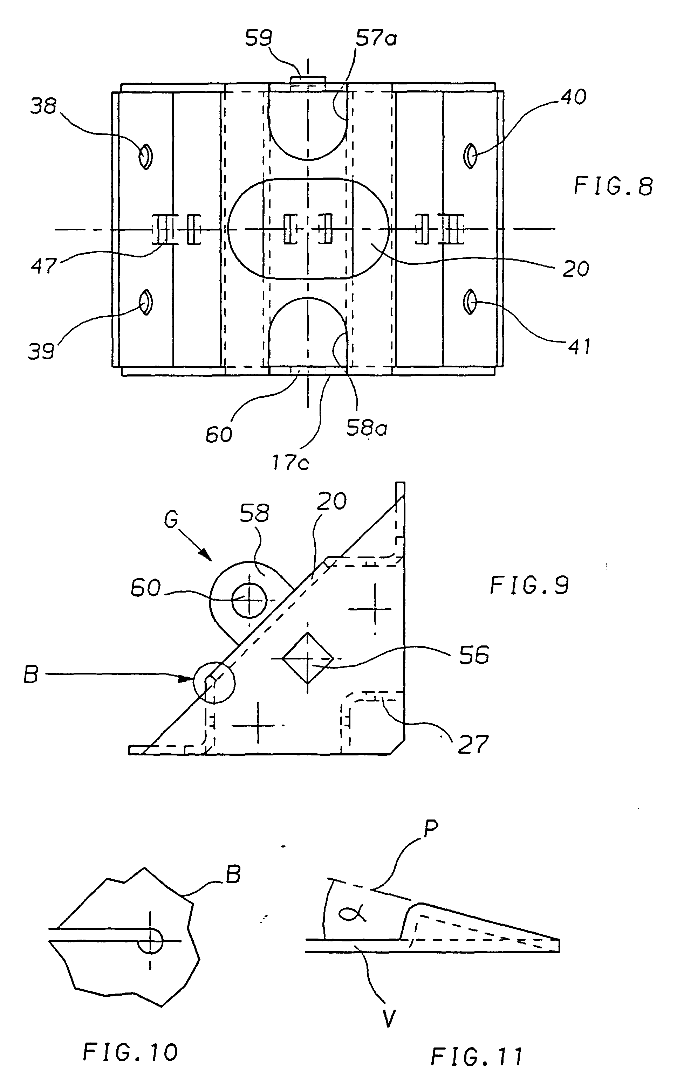

Les plots 1 ainsi constitués par leurs plaques d'assemblage 16, 17 et cloisons 18 à 22, excepté la cloison d'angle 27, pourront être formés à partir d'une pièce de tôle unique découpée puis pliée de manière appropriée, comme illustré sur les figures 9 et 10. Les plaques 16, 17 seront solidarisées aux cloisons de préférence par soudure.

Comme ceci est visible sur les figures 3, 5, 6, 7 et 11, la plaque d'assemblage inférieure 17 de chaque plot d'angle 1 comporte des orifices de fixation 30, 31 situés chacun entre l'une des cloisons intermédiaires 21, 22 et la cloison d'angle 27, de manière à être accessible à partir de l'extérieur du plot d'angle 1, à travers ses faces extérieures 24, 25. Selon cette réalisation particulière de l'invention, ces orifices 30, 31 sont formés par des crevés réalisés dans la plaque inférieure 17 au voisinage de ses bords extérieurs 17a, 17b. Ces crevés forment des protubérances 32, 33 dont le plan supérieur P forme un angle α d'environ 20° par rapport au plan horizontal v de la plaque (figure 11), cet angle α correspondant à l'angle formé entre l'axe de fixation X des orifices 30, 31 et le plan Q, T de la face extérieure verticale correspondante 24 ou 25 du plot d'angle 1.

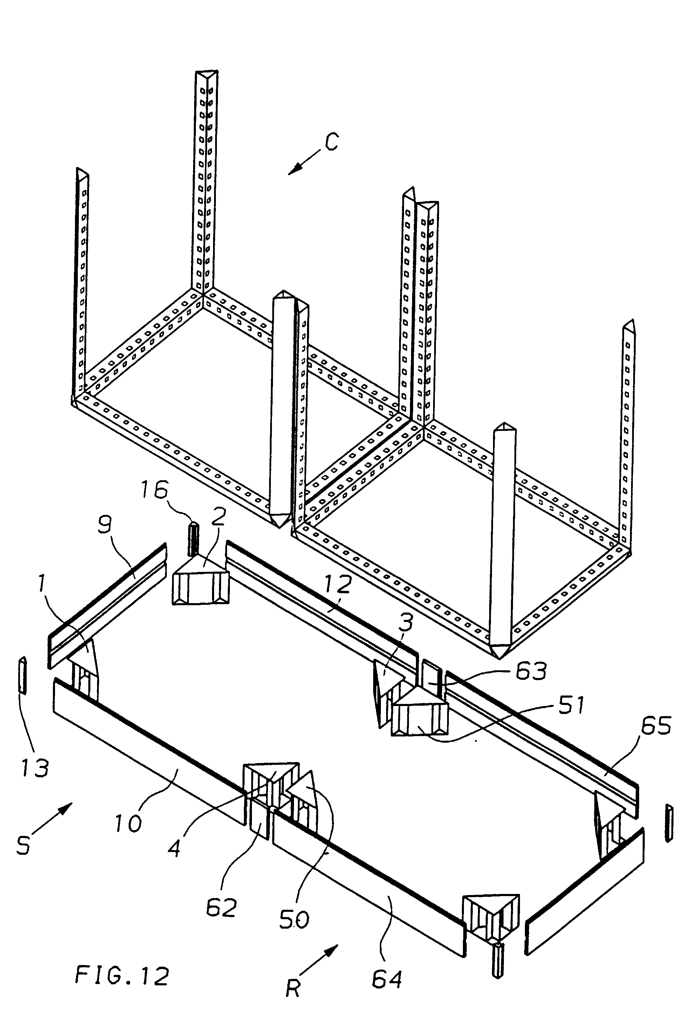

Comme on le voit également sur ces figures, la cloison de fond 20 s'étend dans un plan w formant un angle de 45° avec le plan Q, T des faces extérieures 24, 25 des plots 1, et comporte une ouverture de forme oblongue 34 située environ à mi-hauteur de la cloison 20. Cette ouverture 34 accessible à partir des deux faces extérieures 24, 25 des plots 1 est destinée à recevoir une barre de manipulation (non représentée) introduite par la partie libre 35, 36 de l'une ou l'autre desdites faces 24, 25, perpendiculairement à celles-ci. Les cloisons extérieures 18, 19 comportent chacune deux orifices de fixation 38, 39, 40, 41 des plots d'angle 1, 2, 3, 4 à un plot intermédiaire de liaison 42 (figure 4) destiné à relier deux plots adjacents 4, 50 et 3, 51 lors d'une juxtaposition (figure 12) de deux socles S, R, dans le but d'accroître la rigidité de l'ensemble. Ces plots de liaison 42 comportent deux parois d'extrémité parallèles entre elles 43, 44 destinées à venir en appui respectivement sur les deux cloisons extérieures en vis à vis de deux plots adjacents. Ces parois d'extrémité 43, 44 comportent chacune deux orifices de fixation 45, 46 dont les dimensions et la position correspondent à ceux 38 à 41 des cloisons extérieures 18, 19 de manière à pouvoir leur être superposés.

On voit également que toutes les cloisons verticales 18, 19, 21, 22, 27, excepté la cloison de fond 20, comportent des ouvertures 47 dans lesquelles sont fixés des éléments formant clips 48 destinés à coopérer avec une rainure 49 de forme appropriée formée sur la paroi interne des panneaux 10 afin d'assurer a fixation des panneaux 9 à 12 aux plots d'angle 1, 2, 3, 4.

Les plaques d'assemblage supérieure 16 et inférieure 17 comportent chacune dans leur partie centrale un orifice de section carrée 55, 56. Ces mêmes plaques 16, 17 se prolongent perpendiculairement à leur bord intérieur 16c, 17c par une patte 57, 58, lesdites pattes comportant respectivement un plot circulaire de positionnement 59 en saillie, et un orifice circulaire de positionnement 60, d'un diamètre légèrement supérieur à celui du plot 59. L'orifice de section carrée 55 prévu sur la plaque supérieure 16 est destiné à permettre la fixation du plot 1 soit directement sur le cadre du châssis C, soit sur un autre plot superposé au premier. Celui, 56, réalisé dans la plaque inférieure 17 est prévu soit pour la fixation du plot 1 sur un plot inférieur, soit pour la manutention du plot par un kit de transport à roulettes. Le plot 59 et l'orifice circulaire 60 servent au positionnement relatif de deux plots superposés ou d'un plot par rapport au châssis, et coopèrent pour empêcher la rotation relative de ces deux éléments superposés.

On notera que les pattes précitées 57, 58 seront avantageusement formées par des découpes 57a, 58a formées dans la plaque de fond précitée 20 et pliage de ces portions découpées jusqu'à ce que celles-ci soient ramenées dans le plan des plaques d'assemblage correspondantes 16, 17.

L'utilisation d'un socle conforme à l'invention va être décrite brièvement à travers ce qui suit en référence aux figures.

On notera tout d'abord que l'armoire électrique pourra être livrée avec les quatre pieds 1, 2, 3, 4 du socle S montés ou bien sans le socle, lequel sera livré en kit. Dans le premier cas, le socle S pourra servir de palette et l'ensemble être manutentionné par un chariot élévateur, transpalette ou analogue. De même, cet ensemble pourra être manipulé par élingage ou bien par l'intermédiaire de deux barres reliant les plots deux à deux dans le sens longitudinal oubien transversal du socle. Le socle de l'invention S permettra donc une manipulation et un transport de l'ensemble par tout moyen : rouleaux, transpalette, charriot-élévateur, élingage, barres, kit déménageur, ou bien kit de transport à roulettes introduits rapidement par l'orifice de section carrée 55, 56, de la plaque d'assemblage inférieure 17.

Puis le socle S surmonté du châssis C pourra être fixé au sol par perçage d'orifices dans le sol à travers les orifices 30, 31 de la plaque inférieure 17, puis introduction d'éléments de fixation par les faces extérieures 24, 25 des plots 1, 2, 3, 4 à travers les orifices de fixation 30, 31. Après quoi, des câbles pourront être introduits entre les plots 1, 4 et 2, 3 préalablement à l'habillage du socle S, par clipsage des panneaux 9 à 12 sur les plots 1 à 4, et l'habillage de l'armoire réalisé. On évite ainsi toutes les opérations de marquage et de positionnement préalables à la fixation qui sont nécessaires avec les socles connus.

On notera comme ceci a déjà été suggéré précédemment, qu'un socle multi-étages pourra être constitué par superposition et fixation de quatre nouveaux plots sur les quatre plots 1 à 4 du premier socle S. Le socle sera donc avantageusement modulaire en hauteur au pas de 100 mm. De même, des socles S, R conformes à l'invention pourront être juxtaposés longitudinalement afin de supporter plusieurs armoires également juxtaposées longitudinalement. Dans ce cas, comme ceci est visible sur la figure 12, des plots intermédiaires 42, tels ceux illustrés sur la figure 4 pourront être fixés par leurs deux faces opposées 43, 44, respectivement sur deux plots adjacents 4, 50; 3, 51 afin de rigidifier les socle S, R ainsi constitué. Ceci facilite les manipulations par les moyens précédemment mentionnés en supprimant les pièces de liaison intermédiaires de juxtaposition de cellules classiquement utilisées.

On obtiendra un habillage continu (plastique ou métallique) du socle S, R en prévoyant des éléments de coin d'habillage 13 à 16 reliant des panneaux orthogonaux 9 à 12, et des panneaux intermédiaires 62, 63 reliant deux panneaux adjacents 10, 64 et 12, 65 dans le cas d'une juxtaposition de socles S, R, comme illustré sur la figure 12.

L'invention permet un gain de productivité particulièrement appréciable au niveau du tableautier. En effet, un certain nombre d'opérations sont supprimées telles le démontage de la palette, l'assemblage séparé du socle.

D'autre part, le socle constitué par les quatre plots pourra être livré en standard.

Bien entendu, le mode de réalisation décrit et illustré n'a été donné qu'à titre d'exemple.

C'est ainsi par exemple que tout autre moyen de fixation rapide des panneaux d'habillage pourra être prévu.

L'invention pourra être appliquée au support d'autres éléments que des armoires, tels des cellules, pupitres ou coffrets.

## Revendications

1. Socle pour armoires électriques ou analogues, du genre comprenant quatre plots d'angle et quatre panneaux ou caches reliant les plots d'angle deux à deux, lesdits plots d'angle comprenant chacun une plaque d'assemblage supérieure et une plaque d'assemblage inférieure assemblées mutuellement par des cloisons verticales formant nervures, la plaque supérieure comportant des moyens de fixation du plot au châssis de l'armoire, tandis que la plaque inférieure comporte des moyens de fixation du plot au sol, et les faces extérieures formant l'angle du plot comportant des moyens de fixation des panneaux sur lesdites faces, caractérisé en ce que la plaque d'assemblage inférieure (17) comporte au moins un orifice de fixation (30, 31) du plot (1, 2, 3, 4) au sol, accessible à travers une partie libre de l'une au moins des faces extérieures (24, 25) du plot (1, 2, 3, 4) et dont l'axe (X) est incliné par rapport au plan (Q, T) de cette face (24, 25) de manière à faciliter l'opération de fixation.

2. Socle selon la revendication 1, caractérisé en ce que la plaque d'assemblage inférieure (17) comporte deux orifices de fixation (30, 31) accessibles respectivement à travers les deux faces extérieures précitées (24, 25) du plot (1, 2, 3, 4).

3. Socle selon la revendication 1 ou 2, caractérisé en ce que l'angle α d'inclinaison du (ou des) axe(s) de fixation précité(s) (X) par rapport au plan (Q, T) de la face extérieure correspondante du plot (24, 25) est d'environ 20°.

4. Socle selon l'une quelconque des revendications précédentes, caractérisé en ce que les orifices de fixation précités (30, 31) sont réalisés dans des protubérances (32, 33) formées sur la plaque inférieure d'assemblage (17).

5. Socle selon l'une quelconque des revendications précédentes, caractérisé en ce qu'il comporte une cloison verticale intérieure (20) comprenant au moins une ouverture (34) de passage de barres de manutention ou d'élingues introduites à travers les faces extérieures (24, 25) du plot (1, 2, 3, 4).

6. Socle selon la revendication 5, caractérisé en ce que la cloison intérieure précitée (20) est contenue dans un plan (w) formant avec l'une et/ou l'autre des faces extérieures (24, 25) du plot (1, 2, 3, 4) un angle β d'environ 45° et en ce qu'elle comporte une ouverture unique de forme oblongue (34) autorisant le passage d'une barre où élingue introduite perpendiculairement à l'une ou l'autre des deux faces extérieures (24, 25) du plot (1).

7. Socle selon l'une quelconque des revendications précédentes, caractérisé en ce qu'il comporte deux cloisons extérieures (18, 19), s'étendant à partir de l'extrémité intérieure (a, b) des bords extérieurs (16a, 16b, 17a, 17b) des plaques d'assemblage (16, 17) jusqu'à environ le tiers de leur longueur, de manière à laisser libre accès aux orifices de fixation (30, 31) ainsi qu'à l'(aux) ouverture(s) (34) ménagée(s) dans la cloison intérieure (20).

8. Socle selon la revendication 7, caractérisé en ce qu'il comporte deux cloisons intermédiaires (21, 22) reliant respectivement les deux cloisons extérieures (18, 19) à la cloison intérieure précitée (20).

9. Socle selon l'une quelconque des revendications précédentes, caractérisé en ce que les cloisons extérieures précitées (18, 19) comportent des moyens de fixation (38 à 41) à un plot intermédiaire (42) interposé entre deux plots d'angle adjacents (4, 50; 3, 51) en cas de juxtaposition de deux socles (S, R).

10. Socle selon l'une quelconque des revendications précédentes, caractérisé en ce que les plaques d'assemblage supérieure et inférieure (16, 17) sont de forme triangulaire et en ce que la cloison intérieure précitée (20) relie les deux bords intérieurs respectifs (16c, 17c) des deux plaques d'assemblage (16, 17).

11. Socle selon l'une quelconque des revendications 2 à 10, caractérisé en ce qu'il comporte en outre une cloison d'angle (27) de section transversale en forme de L, reliant les deux régions d'angle (c,d) respectives des deux plaques d'assemblage (16, 17), et en ce que les deux orifices de fixation (30, 31) sont interposés respectivement entre les deux cloisons intermédiaires (21, 22) et cette cloison d'angle (27).

12. Socle selon l'une quelconque des revendications 1 à 10, caractérisé en ce que les deux plaques (16, 17) ainsi que les cloisons verticales (18 à 22) sont formées à partir d'une pièce de tôle unique découpée et pliée de manière appropriée, préalablement à la solidarisation des bords (16a, 16b, 16c, 17a, 17b, 17c) des plaques (16, 17) aux bords correspondants des cloisons (18 à 22).

13. Socle selon l'une quelconque des revendications précédentes, caractérisé en ce que les deux plaques d'assemblage (16, 17) comportent respectivement deux autres orifices de fixation (55, 56) et se prolongent au delà de leur bord intérieur (16c, 17c) pour former respectivement deux pattes (57, 58), ces deux pattes comportant respectivement deux éléments de positionnement complémentaires (59, 60).

14. Armoire électrique comprenant un châssis (C) comportant douze tronçons de profilés creux (p) reliés de manière à former un parallélépipède, ledit châssis (C) étant fixé par ses quatre régions d'angles (5, 6, 7, 8) respectivement, à quatre plots d'angle (1, 2, 3, 4) d'un socle (S) selon l'une quelconque des revendications précédentes.

## Patentansprüche

1. Sockel für Schaltschränke oder dergleichen, der bauartgemäß vier Eckstücke sowie vier, die Eckstücke paarweise miteinander verbindende Abdeckungen oder Blenden umfaßt, wobei die genannten Eckstücke jeweils eine obere Verbindungsplatte und eine untere Verbindungsplatte aufweisen, die über rippenförmig ausgebildete, senkrechte Wände miteinander verbunden sind, die obere Platte Mittel zur Befestigung des Eckstücks am Rahmengestell des Schaltschranks, während die untere Platte Mittel zur Befestigung des Eckstücks am Boden und die winklig aufeinanderstehenden Außenseiten des Eckstücks Mittel zur Befestigung der Abdeckungen an den genannten Seiten umfassen, dadurch gekennzeichnet, daß die untere Verbindungsplatte (17) mindestens eine Öffnung (30, 31) zur Bodenbefestigung des Eckstücks (1, 2, 3, 4) aufweist, die durch eine, an mindestens einer der Außenseiten (24, 25) des Eckstücks (1, 2, 3, 4) ausgebildete Freifläche hindurch zugänglich ist und deren Achse (X) in bezug zur Ebene (Q, T) dieser Außenseite (24 25) geneigt ist, um so den Befestigungsvorgang zu erleichtern.

2. Sockel nach Anspruch 1, dadurch gekennzeichnet, daß die untere Verbindungsplatte (17) zwei Befestigungsöffnungen (30, 31) umfaßt, die jeweils von den zwei genannten Außenseiten (24, 25) des Eckstücks (1, 2, 3, 4) her zugänglich sind.

3. Sockel nach Anspruch 1 oder 2, dadurch gekennzeichnet, daß der Neigungswinkel a zwischen der/den genannten Befestigungsachse/n (X) und der Ebene (Q, T) der jeweiligen Außenseite (24, 25) des Eckstücks etwa 20° beträgt.

4. Sockel nach irgendeinem der vorhergehenden Ansprüche, dadurch gekennzeichnet, daß die genannten Befestigungsöffnungen (30, 31) in Ausbuchtungen (32, 33) der unteren Verbindungsplatte (17) ausgebildet sind.

5. Sockel nach irgendeinem der vorhergehenden Ansprüche, dadurch gekennzeichnet, daß er eine senkrechte Innenwand (20) mit mindestens einer Durchführungsöffnung (34) für Transportstangen oder Schlingen umfaßt, die von den Außenseiten (24, 25) des Eckstücks (1, 2, 3, 4) her eingeführt werden.

6. Sockel nach Anspruch 5, dadurch gekennzeichnet, daß die genannte Innenwand (20) in einer Ebene (w) liegt, die in einem Winkel β von etwa 45° zur einen und/oder anderen Außenseite (24, 25) des Eckstücks (1, 2, 3, 4) steht, und eine einzelne längliche Öffnung (34) aufweist, die das Hindurchführen einer Stange oder Schlinge erlaubt, welche rechtwinklig zu der einen bzw. anderen der beiden Außenseiten (24, 25) des Eckstücks (1) eingeführt werden.

7. Sockel nach irgendeinem der vorhergehenden Ansprüche, dadurch gekennzeichnet, daß er zwei Außenwände (18, 19) umfaßt, die sich vom inneren Endpunkt (a, b) der Außenränder (16a, 16b, 17a, 17b) der Verbindungsplatten (16, 17) bis etwa zu einem Drittel ihrer Länge erstrecken, derart daß ein freier Zugang zu den Befestigungsöffnungen (30, 31) sowie zu der bzw. den in der Innenwand (20) ausgebildeten Öffnungen (34) gewährleistet ist.

8. Sockel nach Anspruch 7, dadurch gekennzeichnet, daß er zwei Zwischenwände (21, 22) umfaßt, die die beiden Außenwände (18, 19) mit der genannten Innenwand (20) verbinden.

9. Sockel nach irgendeinem der vorhergehenden Ansprüche, dadurch gekennzeichnet, daß die genannten Außenwände (18, 19) Mittel (38 bis 41) zur Befestigung an ein Zwischenstück (42) umfassen, die bei Aneinanderreihung von zwei Sockeln (S, R) zwischen zwei nebeneinander liegendem Eckstücken (4, 50; 3, 51) eingefügt werden.

10. Sockel nach irgendeinem der vorhergehenden Ansprüche, dadurch gekennzeichnet, daß die obere und die untere Verbindungsplatte (16, 17) dreieckig ausgebildet sind und die genannte Innenwand (20) die beiden Innenränder (16c, 17c) der zwei Verbindungsplatten (16, 17) miteinander verbindet.

11. Sockel nach irgendeinem der Ansprüche 2 bis 10, dadurch gekennzeichnet, daß er darüber hinaus eine Eckwand (27) mit L-förmigem Querschnitt umfaßt, die die beiden Eckbereiche (c, d) der zwei Verbindungsplatten (16, 17) miteinander verbindet, und daß die beiden Befestigungsöffnungen (30, 31) jeweils zwischen den beiden Zwischenwänden (21, 22) und dieser Eckwand (27) angeordnet sind.

12. Sockel nach irgendeinem der Ansprüche 1 bis 10, dadurch gekennzeichnet, daß die beiden Verbindungsplatten (16, 17) sowie die senkrechten Wände (18 bis 22) jeweils aus einem Blech einstückig ausgeschnitten und in geeigneter Weise abgekantet werden, bevor die Ränder (16a, 16b, 16c, 17a, 17b, 17c) der Platten (16, 17) mit den zugehörigen Rändern der Wände (18 bis 22) verbunden werden.

13. Sockel nach irgendeinem der vorhergehenden Ansprüche, dadurch gekennzeichnet, daß die beiden Verbindungsplatten (16, 17) jeweils zwei zusätzliche Befestigungsöffnungen (55, 56) aufweisen und über ihren Innenrand (16c, 17c) hinaus unter Ausbildung von zwei Zungen (57, 58) verlängert sind, wobei die beiden Zungen zwei komplementäre Positionierelemente (59, 60) aufweisen.

14. Schaltschrank mit einem Rahmengestell (C), das zwölf quaderförmig miteinander verbundene Hohlprofilabschnitte (p) umfaßt, wobei das genannte Rahmengestell (C) in seinen vier Eckbereichen (5, 6, 7, 8) an vier Eckstücken (1, 2, 3, 4) eines nach irgendeinem der vorhergehenden Ansprüche ausgeführten Sockels (S) befestigt ist.

## Claims

1. A base for electrical cabinets or similar, of the kind comprising four corner studs and four panels or cover plates joining the corner studs two by two, said corner studs each comprising a top assembly plate and a bottom assembly plate assembled to one another by vertical partitions forming ribs, the top plate comprising means for fixing the stud to the frame of the cabinet, whereas the bottom plate comprises means for fixing the stud to the ground, and the external faces forming the corner of the stud comprising means for fixing the panels onto said faces, characterized in that the bottom assembly plate (17) comprises at least one fixing hole (30, 31) for fixing the stud (1, 2, 3, 4) to the ground, accessible via a free part of at least one of the external faces (24, 25) of the stud (1, 2, 3, 4) and whose axis (X) is inclined with respect to the plane (Q, T) of this face (24, 25) so as to make the fixing operation easier.

2. The base according to claim 1, characterized in that the bottom assembly plate (17) comprises two fixing holes (30, 31) respectively accessible via the above-mentioned two external faces (24, 25) of the stud (1, 2, 3, 4).

3. The base according to claim 1 or 2, characterized in that the angle of incline a of the above-mentioned fixing axis or axes (X) with respect to the plane (Q, T) of the corresponding external face (24, 25) of the stud is about 20°.

4. The base according to any one of the foregoing claims, characterized in that the above-mentioned fixing holes (30, 31) are achieved in protuberances (32, 33) formed on the bottom assembly plate (17).

5. The base according to any one of the foregoing claims, characterized in that it comprises a vertical internal partition (20) comprising at least one opening (34) to enable handling bars or slings inserted via the external faces (24, 25) of the stud (1, 2, 3, 4) to pass through.

6. The base according to claim 5, characterized in that the above-mentioned internal partition (20) is contained in a plane (w) forming an angle β of about 45° with one or the other of the external faces (24, 25) of the stud (1, 2, 3, 4) and that it comprises a single opening of oblong shape (34) enabling a bar or sling inserted perpendicularly to one or the other of the two external faces (24, 25) of the stud (1) to pass through.

7. The base according to any one of the foregoing claims, characterized in that it comprises two external partitions (18, 19) extending from the inside end (a, b) of the external edges (16a, 16b, 17a, 17b) of the assembly plates (16, 17) up to about one third of their length, so as to leave free access to the fixing holes (30, 31) and to the opening (or openings) (34) arranged in the internal partition (20).

8. The base according to claim 7, characterized in that it comprises two intermediate partitions (21, 22) respectively joining the two external partitions (18, 19) to the above-mentioned internal partition (20).

9. The base according to any one of the foregoing claims, characterized in that the above-mentioned external partitions (18, 19) comprise fixing means (38 to 41) for fixing to an intermediate stud (42) fitted between two adjacent corner studs (4, 50; 3, 51) in case of juxtaposition of two bases (S, R).

10. The base according to any one of the foregoing claims, characterized in that the top and bottom assembly plates (16, 17) are of triangular shape and that the above-mentioned internal partition (20) joins the two respective inside edges (16c, 17c) of the two assembly plates (16, 17).

11. The base according to any one of the claims 2 to 10, characterized in that it comprises in addition a corner partition (27) of L-shaped transverse cross section joining the two respective corner regions (c, d) of the two assembly plates (16, 17) and that the two fixing holes (30, 31) are respectively situated between the two intermediate partitions (21, 22) and this corner partition (27).

12. The base according to any one of the claims 1 to 10, characterized in that the two plates (16, 17) as well as the vertical partitions (18 to 22) are formed from a single sheet metal part cut and folded in suitable manner, before the edges (16a, 16b, 16c, 17a, 17b, 17c) of the plates (16, 17) are secured to the corresponding edges of the partitions (18 to 22).

13. The base according to any one of the foregoing claims, characterized in that the two assembly plates (16, 17) respectively comprise two other fixing holes (55, 56) and extend beyond their inside edge (16c, 17c) to respectively form two lugs (57, 58), these two lugs respectively comprising two complementary positioning elements (59, 60).

14. An electrical cabinet comprising a frame (C) comprising twelve hollow profiled sections (p) joined so as to form a parallelepiped, said frame (C) being fixed by its four corner regions (5, 6, 7, 8) respectively to four corner studs (1, 2, 3, 4) of a base (S) comprising any one of the foregoing features.
